# EUROPÄISCHE PATENTSCHRIFT

(11) **EP 0 689 404 B1**
(45) Veröffentlichungstag und Bekanntmachung des Hinweises auf die Patenterteilung: **28.05.1997**
(21) Anmeldenummer: 94910394.9
(22) Anmeldetag: 08.03.1994
(51) Int. Cl.: A61C 17/22

(54) **ELEKTRISCHE ZAHNBÜRSTE**
ELECTRIC TOOTHBRUSH
BROSSE A DENTS ELECTRIQUE

(30) Priorität: 20.03.1993 DE 4309035
(43) Veröffentlichungstag der Anmeldung: 03.01.1996
(73) Patentinhaber: Braun Aktiengesellschaft, Frankfurt am Main (DE)
(72) Erfinder: GÖCKING, Wolfgang, D-60322 Frankfurt (DE); DRIESEN, Georges, D-65760 Eschborn (DE); DRÖSSLER, Michael, D-61440 Oberursel (DE)
(86) Internationale Anmeldenummer: EP9400704
(87) Internationale Veröffentlichungsnummer: WO9421191

(56) Entgegenhaltungen:
- EP-A- 0 259 648
- WO-A-93/20777
- DE-A- 3 544 256
- DE-A- 3 937 850
- US-A- 5 070 567

## Beschreibung

Die Erfindung betrifft eine elektrische Zahnbürste mit einem Bürstenteil, in dem eine drehbar gelagerte Welle untergebracht und an dem ein mit der Welle gekoppelter Borstenträger drehbar gelagert ist, und mit Mitteln zum alternierenden Antrieb der Welle, wobei ein weiteres, einen Träger aufweisendes Bürstenteil vorgesehen ist, das mit der Welle gekoppelt ist.

Eine derartige elektrische Zahnbürste ist beispielsweise aus US 5 070 567 A bekannt. Diese Zahnbürste Weist einen Bürstenkopf auf, der eine erste Gruppe von im wesentlichen geradlinig hintereinander angeordneten Borstenträgern sowie eine zweite Gruppe von kreisförmig angeordneten Borstenträgern besitzt, wobei sämtliche Borstenträger um ihre Längsachsen drehbar sind. Des weiteren laufen die kreisförmig angeordneten Borstenträger auch auf einer Kreisbahn um. Die Welle zum Antrieb der Borstenträger kann in rotierende bzw. alternierend oszillierende Bewegung versetzt werden. Eine besondere Wirkung dieser bekannten elektrischen Zahnbürste bezüglich der Interdentalreinigung ist nicht beschrieben.

Eine weitere elektrische Zahnbürste ist aus der deutschen Offenlegungsschrift DE 39 37 850 A1 bekannt. Dort wird die alternierende Drehbewegung der Welle mit Hilfe eines Kegelradgetriebes auf den Borstenträger übertragen. Dieser ist mit einer Vielzahl von Borsten versehen, deren freie Enden eine etwa kreisförmige Putzfläche bilden. Im eingeschalteten Zustand der elektrischen Zahnbürste führt diese Putzfläche eine alternierende Drehbewegung um ihre Senkrechte aus. Der Benutzer der Zahnbürste kann mit der Putzfläche die Oberflächen wie auch die Zahnzwischenräume der Zähne reinigen und auch das Zahnfleisch massieren.

Aus dem deutschen Geschmacksmuster M 92 03 436 ist eine Aufsteckbürste für eine elektrische Zahnbürste bekannt, bei der ein Borstenträger einstückig mit dem Bürstenstiel verbunden ist. Der Borstenträger weist eine Vielzahl von Borsten, deren freie Enden eine längliche Putzfläche bilden, sowie eine einzelne Borstengruppe, deren Borsten zu einer Spitze ausgebildet sind, auf. Die Putzfläche dient im wesentlichen der Reinigung der Oberflächen der Zähne, während die Borstengruppe für die Reinigung der Zahnzwischenräume vorgesehen ist. Bei eingeschalteter elektrischer Zahnbürste führen die Borsten der Putzfläche und der einzelnen Borstengruppe dieselbe Bewegung aus.

Aufgabe der Erfindung ist es, eine elektrische Zahnbürste der eingangs genannten Art zu schaffen, mit der eine verbesserte Reinigung auch der Zahnzwischenräume möglich ist.

Diese Aufgabe wird im wesentlichen durch eine elektrische Zahnbürste mit den Merkmalen des Anspruchs 1 gelöst.

Mit Hilfe der Interdentalbürste ist es möglich, durch eine elektrische Zahnbürste der eingangs benannten Art die Zahnzwischenräume besonders einfach und gründlich zu reinigen. Die Interdentalbürste ist jedoch nicht auf dem Borstenträger angeordnet und über das Kegelradgetriebe mit der Welle gekoppelt, sondern unabhängig vom Borstenträger mit der in eine, bevorzugt alternierende, Drehbewegung um eine zur Welle im wesentlichen senkrecht angeordnete Achse und die Interdentalbürste in eine alternierende Schwenkbewegung oder hin- und hergehende Bewegung um die Drehachse der Welle zu versetzen. Im eingeschalteten Zustand der elektrischen Zahnbürste kann der Benutzer mit der Putzfläche des oszillierenden Borstenträgers die Oberflächen der Zähne sowie mit der eine Schwenkbewegung bzw. hin- und hergehende Bewegung ausführenden Interdentalbürste die Zahnzwischenräume reinigen. Die Reinigung der Zähne erfolgt somit im wesentlichen mit Hilfe der die Putzfläche bildenden freien Enden der Borsten des Borstenträgers, während für eine zusätzliche, noch wirksame Reinigung der Zahnzwischenräume die Borsten der Interdentalbürste vorgesehen sind.

Bei einer vorteilhaften Ausgestaltung der elektrischen Zahnbürste ist die Interdentalbürste mit Abstand zum Borstenträger angeordnet. Hierdurch wird erreicht, daß die Interdentalbürste tief in die Zahnzwischenräume eindringen kann, ohne daß die die Putzfläche bildenden Borsten dieses aufgrund der Abstützung auf den Zahnoberflächen verhindern können.

Bei einer weiteren vorteilhaften Ausgestaltung ist die Interdentalbürste winklig, insbesondere etwa rechtwinklig zur Welle angeordnet. Auf diese Weise wird erreicht, daß die Interdentalbürste wischerartig eine möglichst große Fläche überstreicht und damit eine gute Reinigung in den Zahnzwischenräumen bewirkt.

Zweckmäßig ist es, wenn die Interdentalbürste im Bereich des Bürstenteils angeordnet und in dem Bürstenteil eine Öffnung vorgesehen ist, durch die die Interdentalbürste hindurchgesteckt ist. Auf diese Weise ist die im Bürstenteil untergebrachte Welle nicht offen zugänglich und der Benutzer der elektrischen Zahnbürste vor möglichen Verletzungen durch diese Bauteile gut geschützt.

Bei einer vorteilhaften Weiterbildung der elektrischen Zahnbürste weist die Interdentalbürste einen Träger auf, in dem wenigstens eine, insbesondere zwei Borstengruppen gehalten sind. Die Borstengruppen sind zweckmäßigerweise in Schwenkrichtung der Interdentalbürste nebeneinander angeordnet. Durch eine derartige Anordnung von Borstengruppen wird erreicht, daß die Borsten der Borstengruppen leicht in die Zahnzwischenräume eingeführt werden können.

Es ist nun möglich, daß dieser Träger zur drehfesten Verbindung mit der Welle mit dieser verklebt oder verschweißt ist. Diese Methoden stellen eine einfache und sichere Art der Befestigung der Interdentalbürste an der Welle dar.

Es ist jedoch auch in vorteilhafter Weise möglich, daß der Träger mit einem oder mehreren Zapfen und die Welle mit einem oder mehreren zugeordneten Bohrungen zum Einstecken des Trägers versehen ist. Diese Art der Kopplung der Interdentalbürste und der Welle kann zusätzlich durch Kleben oder Verschweißen verstärkt werden.

Bei einer vorteilhaften Ausgestaltung der elektrischen Zahnbürste weisen die Borsten des Borstenträgers etwa in dieselbe Richtung wie die Borsten der Interdentalbürste. Von Vorteil sind die Borsten der Interdentalbürste länger ausgebildet als die Borsten des Borstenträgers. Dadurch können die Borsten der Interdentalbürste leicht in die Zahnzwischenräume eindringen.

Es hat sich als zweckmäßig erwiesen, daß der Drehwinkelbereich der Welle in einem Wertebereich von etwa +/- 35 Grad liegt. Die Interdentalbürste weist damit ebenfalls einen solchen Schwenkbereich auf, der eine gute Reinigungswirkung gewährleistet.

Nach einer weiteren Ausgestaltung der Erfindung weist der Träger in einem Fußabschnitt eine Bohrung auf und ist mittels eines Stiftes an der Welle festgelegt. Diese Ausgestaltung hat sich insbesondere nach einer Ausführungsform der Zahnbürste, wie sie in der deutschen Patentanmeldung P42 39 251 beschrieben ist, als sinnvoll erwiesen. Zum einen ist durch diese Art der Festlegung eine einfache Montage der Zahnbürste möglich, während andererseits diese Art der Festlegung aus wirtschaftlicher Sicht sehr kostengünstig ist.

Dadurch, daß der Stift einends in einer Bohrung der Welle und anderenends in einer Bohrung des Trägerrohres aufgenommen ist, wobei die Bohrungen zentrisch bezüglich einer Drehachse der Welle angeordnet sind, wird durch den Stift neben einer Festlegung des Trägers auch eine zusätzliche Lagerung der Welle bezüglich der Drehachse gewährleistet.

Nach einer günstigen Weiterbildung der Erfindung ist eine am Fußabschnitt angeordnete Rippe des Trägers von einer an der Welle vorgesehenen Nut aufgenommen. Durch diese Maßnahme insbesondere in Verbindung mit dem den Träger durchdringenden Stift ist der Träger äußerst sicher und dauerhaft an der Welle festgelegt.

Nach einer weiteren, vorteilhaften Ausgestaltung der Erfindung weist der Borstenträger eine randseitige Ausnehmung in Form eines Kreissegmentes auf. Hierdurch wird die Möglichkeit geschaffen, den Träger sehr dicht oder sogar im Bereich des Borstenträgers anzuordnen, so daß insbesondere ein äußerst kompakter und handlicher Reinigungskopf der Bürste geschaffen wird.

Von Vorteil ist der Träger unmittelbar benachbart zum Borstenträger angeordnet und/oder in diesen integriert.

Gemäß einer Weiterbildung der Erfindung weisen die Borsten des Trägers einen größeren Durchmesser und/oder eine höhere Steifigkeit als die Borsten des Borstenträgers auf. Hierdurch wird die Stabilität der längeren Borsten der Interdentalbürste ausreichend erhöht, so daß diese sicher in die Zahnzwischenräume eindringen können.

Weiterhin hat sich aufgrund der kombinierten Putzbewegung der Interdentalbürste sowie der Rundbürste die Möglichkeit ergeben, den Drehwinkel des Borstenträgers auf Werte im Bereich von etwa +/- 25 Grad festzulegen. Aufgrund der Reinigungswirkung der zusätzlichen Interdentalbürste kann der Oszillationswinkel des Borstenträgers verringert und somit der Aufwand für das Getriebe des Borstenträgers reduziert werden. Ein anderer Vorteil der Reduktion des Drehwinkels des Borstenträgers besteht darin, daß das Getriebe auch weniger stark beansprucht wird als bei größeren Oszillationswinkeln.

Weitere Merkmale, Vorteile und Anwendungsmöglichkeiten der Erfindung ergeben sich aus der nachfolgenden Beschreibung der Ausführungsbeispiele, die in der Zeichnung näher dargestellt sind.

Es zeigen:
- Fign. 1a, b: eine Draufsicht und Seitenansicht, teilweise geschnitten, eines vereinfacht dargestellten Ausführungsbeispiels des Bürstenteils einer elektrischen Zahnbürste nach der Erfindung,
- Fig. 2: einen Längsschnitt durch das Bürstenteil der Fign. 1a und 1b,
- Fig. 3: einen Querschnitt durch das Bürstenteil der Fign. 1a und 1b im Bereich der Interdentalbürste mit einer ersten Art der Befestigung,
- Fig. 4: einen Querschnitt durch das Bürstenteil der Fign. 1a und 1b im Bereich der Interdentalbürste mit einer zweiten Art der Befestigung,
- Fig. 5: einen Teilquerschnitt durch das Bürstenteil im Bereich der Interdentalbürste nach einer weiteren Art der Befestigung,
- Fig. 6: einen Schnitt durch den Träger der Interdentalbürste gemäß der Schnittlinie B-B der Fig. 5 und
- Fig. 7: eine Draufsicht eines vereinfacht dargestellten weiteren Ausführungsbeispiels.

Die nachfolgende Beschreibung betrifft eine Weiterbildung der Zahnbürste gemäß der deutschen Offenlegungsschrift DE 39 37 850 A1, sowie der deutschen Patentanmeldung P 42 39 251.9 mit einem alternierenden Getriebe für den Borstenträger.

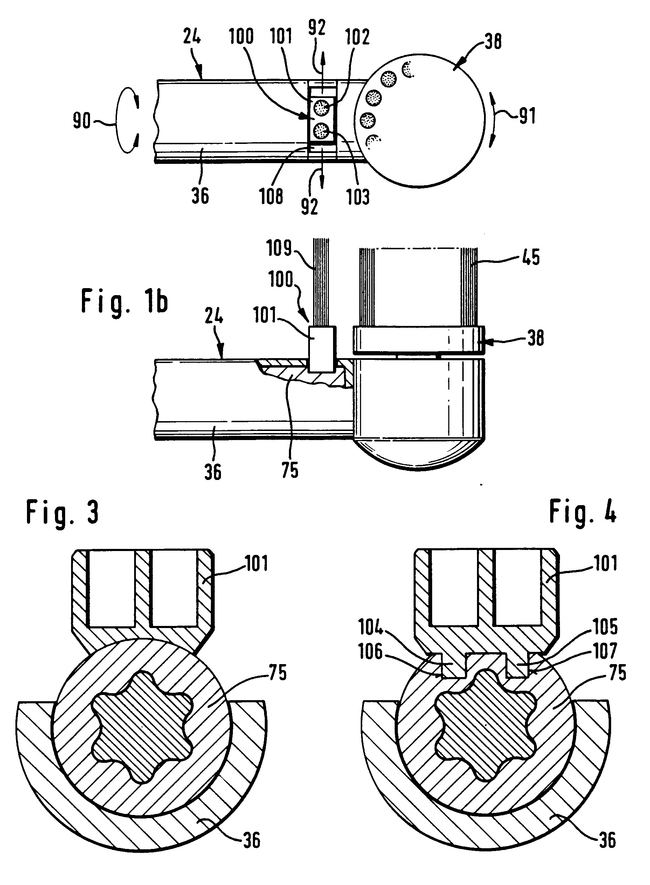

Die Fign. 1a und 1b der vorliegenden Anmeldung zeigen schematische Darstellungen einer Draufsicht und einer Seitenansicht eines Bürstenteils 24 einer elektrischen Zahnbürste nach der Erfindung. Das Bürstenteil 24 besteht aus einem hohlen Trägerrohr 36, das eine Welle 75 drehbar aufnimmt. An dem freien Ende des Bürstenteils 24 ist ein Borstenträger 38 drehbar gelagert, in dem zu einzelnen Büscheln zusammengefaßte Borsten 45 gehalten sind.

Die Welle 75 ist in nicht dargestellter Weise mit Mitteln gekoppelt, die die Welle 75 in eine alternierende Drehbewegung um ihre Längsachse versetzen. Der Drehwinkelbereich der Welle 75 liegt dabei in einem Wertebereich von etwa +/- 35 Grad.

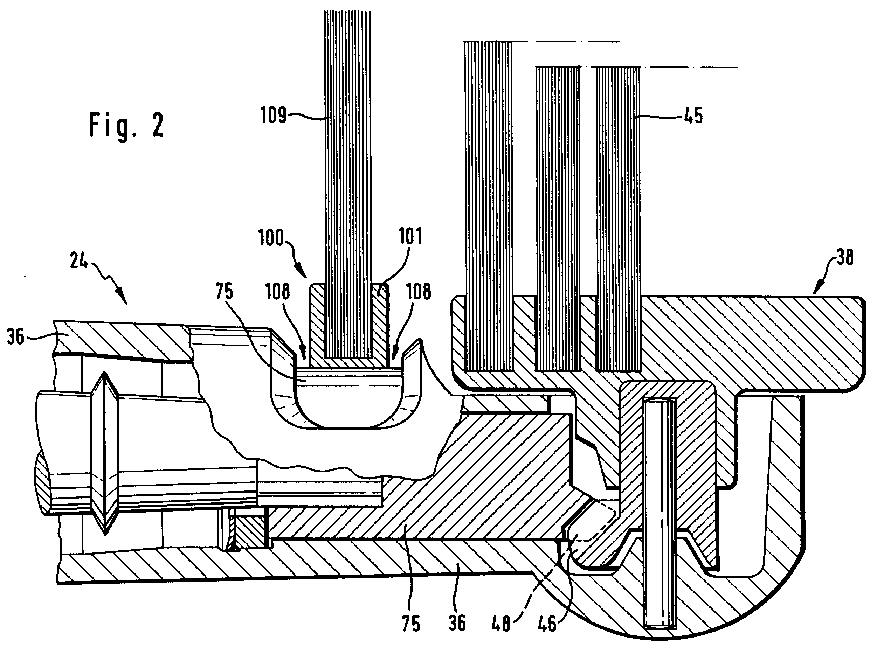

Wie insbesondere der Fig. 2 zu entnehmen ist, sind die Drehachse der Welle 75 und die Drehachse des Borstenträgers 38 bevorzugt etwa senkrecht zueinander angeordnet. Der Borstenträger 38 ist mit einer Kegelradverzahnung 46 versehen, die mit einem am Kopfende der Welle 75 angeordneten Kegelradsegment 48 kämmt. Über dieses Kegelradgetriebe wird die alternierende Drehbewegung der Welle 75 auf den Borstenträger 38 übertragen. Die Drehbewegung der Welle 75 ist in der Fig. 1a mit der Bezugsziffer 90 und die Drehbewegung des Borstenträgers 38 mit der Bezugsziffer 91 gekennzeichnet.

Gemäß den Fign. 1a, 1b und 2 ist eine Interdentalbürste 100 mit Abstand zum Borstenträger 38 und etwa im Bereich des Bürstenteils 24 angeordnet. Die Interdentalbürste 100 steht etwa rechtwinklig von der Welle 75 ab, ist fest mit dieser verbunden und ragt durch eine Öffnung 108 des Trägerrohrs 36 nach außen. Die Borsten 109 der Interdentalbürste 100 weisen unter Vernachlässigung der Schwenkbewegung etwa in dieselbe Richtung wie die Borsten 45 des Borstenträgers 38. Des weiteren sind die Borsten 109 der Interdentalbürste 100 insbesondere etwa um 1-2 mm länger als die Borsten 45 des Borstenträgers 38.

Die Interdentalbürste 100 weist einen Träger 101 auf, in dem die Borsten 109 gehalten sind. Die Borsten 109 sind zu insbesondere zwei Borstengruppen 102, 103 zusammengefaßt, die quer zur Welle 75 nebeneinander angeordnet sind.

Gemäß einer ersten Art der Befestigung ist der Träger 101 mit der Welle 75 verklebt oder verschweißt. Bei einer zweiten Art der Befestigung weist der Träger 101 an seiner Unterseite zwei Zapfen 104, 105 auf, die in zugeordnete Bohrungen 106, 107 in der Welle 75 eingesteckt sind. Diese zweite Art der Befestigung des Trägers 101 an der Welle 75 kann noch durch ein zusätzliches Verkleben oder Verschweißen verstärkt werden.

Durch die drehfeste Kopplung der Interdentalbürste 100 mit der Welle 75 führt die Interdentalbürste 100 bei eingeschalteter elektrischer Zahnbürste eine alternierende Schwenkbewegung um die Drehachse der Welle 75 durch, die mit der Bezugsziffer 92 gekennzeichnet ist. Die Interdentalbürste 100 führt eine wischerartige Schwenkbewegung mit der alternierenden Drehbewegung der Welle 75 aus, die insbesondere der Reinigung der Zahnzwischenräume dient. Die davon unabhängige alternierende Drehbewegung der Borsten 45 des Borstenträgers 38 bleibt erhalten und wird zur Reinigung im wesentlichen der außenliegenden Oberflächen der Zähne eingesetzt.

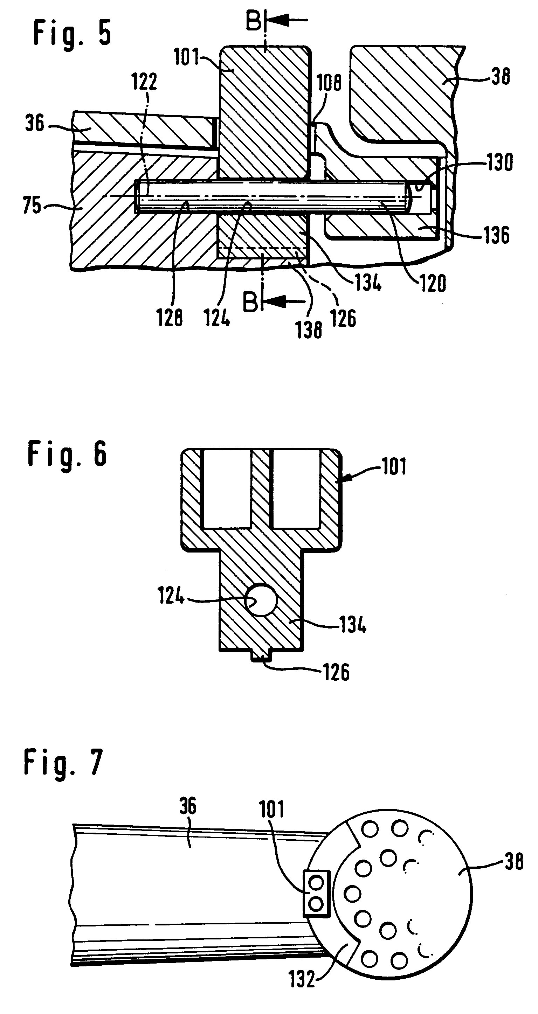

Nach einer weiteren Ausführungsform ist der Träger 101 mittels eines Stiftes 120 an der Welle 75 festgelegt (Fign. 5, 6). Hierzu weist der Träger 101 in einem Fußabschnitt 134 eine Bohrung 124 auf. Desweiteren kann am unteren Ende des Fußabschnittes 134 eine Rippe 126 angeordnet sein. Die Welle 75 ist am kopfseitigen Endabschnitt mit einer Bohrung 128, insbesondere einer Sacklochbohrung ausgestattet. Ein vorderer Kopfabschnitt 136 des Trägerrohrs 36 weist ebenfalls eine Bohrung 130, die auch als Sacklochbohrung ausgebildet sein kann auf. Die Mittelachsen der Bohrungen 128 und 130 sind mit der Drehachse 122 der Welle 75 identisch. Das kopfseitige Ende der Welle 75 kann einseitig in Form eines Steges 138 verlängert sein, der in axialer Richtung eine in der Figur nicht sichtbare Nut aufweist, die die ggf. am Fußabschnitt 134 angeformte Rippe 126 aufnimmt. Zur Montage der Interdentalbürste 100 am Bürstenteil 24 wird der Stift 120 in die Bohrung 128 eingefügt und die zunächst außerhalb des Trägerrohres 36 befindliche Welle 75 in das offene Ende des Trägerrohres 36 eingeführt. Die Interdentalbürste 100 wird von oben in die Öffnung 108 eingesetzt und die Welle 75 mit dem Stift 120 im Trägerrohr 36 in Richtung des kopfseitigen Abschnittes 136 geschoben. Dabei durchdringt der Stift 120 die Bohrung 124 des Fußabschnittes 134 des Trägers 101 und wird von der Bohrung 130 im Endabschnitt 136 des Trägerrohres 36 aufgenommen. Durch diese Maßnahme wird nicht nur eine sichere Festlegung des Trägers 101 an der Welle 75 sondern auch eine kopfseitige Lagerung der Welle 75 bezüglich der Drehachse 122 erreicht.

Gemäß einem weiteren Ausführungsbeispiels kann der Borstenträger 38 eine Ausnehmung in Form eines Kreissegmentes 132 aufweisen, die sich über einem Winkelbereich erstreckt, der in etwa dem Oszillationswinkel des Borstenträgers 38 entspricht. Im Bereich dieses Kreissegmentes 132 ist dann der Träger 1C1 der Interdentalbürste 100 unmittelbar benachbart zum Borstentträger angeordnet. Durch eine derartige Integration des Trägers 101 im Bereich des Borstenträgers 38 wird ein kompakter Reinigungskopf mit einem einzigen Borstenfeld geschaffen, bei dem eine Vielzahl von Borsten 45 eine oszillierende Bewegung um die Mittelachse des Borstenträgers 38 und die Borsten 109 der Interdentalbürste 100 eine oszillierende Bewegung um die Drehachse 122 der Welle 75 ausüben. Auch hier sind die Borsten 109 der Interdentalbürste 100 länger ausgebildet als die Borsten 45. Zur Erhöhung der Stabilität der längeren Borsten 109 sind diese von Vorteil dicker ausgebildet als die Borsten 45 bzw. weisen aufgrund der Materialauswahl eine höhere Steifigkeit als diese auf.

## Patentansprüche

1. Elektrische Zahnbürste mit einem Bürstenteil (24), in dem eine drehbar gelagerte Welle (75) untergebracht und an dem ein mit der Welle (75) gekoppelter Borstenträger (38) drehbar gelagert ist, und mit Mitteln zum alternierenden Antrieb der Welle (75), wobei ein weiteres einen Träger (101) aufweisendes Bürstenteil vorgesehen ist, das mit der Welle (75) gekoppelt ist, dadurch gekennzeichnet, daß das weitere Bürstenteil als Interdentalbürste (100) ausgebildet ist, wobei der Träger (101) mit der Welle drehfest verbunden ist, so daß der Träger (101) bei alternierend angetriebener Welle (75) eine alternierende Schwenkbewegung um die Drehachse der Welle (75) ausführt bei gleichzeitiger alternierender Drehbewegung des Borstenträgers (38) um eine zur Welle (75) im wesentlichen senkrechte Achse.

2. Elektrische Zahnbürste nach Anspruch 1, dadurch gekennzeichnet, daß die Interdentalbürste (100) mit Abstand zum Borstenträger (38) angeordnet ist.

3. Elektrische Zahnbürste nach Anspruch 1 oder 2, dadurch gekennzeichnet, daß die Interdentalbürste (100) winklig, insbesondere etwa rechtwinklig zur Welle (75) angeordnet ist.

4. Elektrische Zahnbürste nach einem der Ansprüche 1 bis 3, dadurch gekennzeichnet, daß die Interdentalbürste (100) im Bereich des Bürstenteils (24) angeordnet ist, und daß in dem Bürstenteil (24) eine Öffnung (108) vorgesehen ist, durch die die Interdentalbürste (100) hindurchgesteckt ist.

5. Elektrische Zahnbürste nach einem der Ansprüche 1 bis 4, dadurch gekennzeichnet, daß die Interdentalbürste (100) einen Träger (101) aufweist, in dem wenigstens eine, insbesondere zwei Borstengruppen (102, 103) gehalten sind.

6. Elektrische Zahnbürste nach einem der Ansprüche 1 bis 5, dadurch gekennzeichnet, daß der Träger (101) mit der Welle (75) verklebt oder verschweißt ist.

7. Elektrische Zahnbürste nach Anspruch 5 oder 6, dadurch gekennzeichnet, daß der Träger (101) mit einem oder mehreren Zapfen (104, 105) und die Welle (75) mit einem oder mehreren zugeordneten Bohrungen (106, 107) zum Einstecken des Trägers (38) versehen ist.

8. Elektrische Zahnbürste nach einem der Ansprüche 1 bis 7, dadurch gekennzeichnet, daß die Borsten (45) des Borstenträgers (38) etwa in dieselbe Richtung weisen wie die Borsten (109) der Interdentalbürste (100).

9. Elektrische Zahnbürste nach einem der Ansprüche 1 bis 8, dadurch gekennzeichnet, daß die Borsten der Interdentalbürste (100) länger sind als die Borsten (45) des Borstenträgers (38).

10. Elektrische Zahnbürste nach einem der Ansprüche 1 bis 9, dadurch gekennzeichnet, daß der Drehwinkelbereich der Welle (75) in einen Wertebereich von etwa +/- 35 Grad liegt.

11. Elektrische Zahnbürste nach einem der Ansprüche 1 bis 10, dadurch gekennzeichnet, daß der Träger (101) in einem Fußabschnitt (134) eine Bohrung (124) aufweist und mittels eines Stiftes (120) an der Welle (75) festgelegt ist.

12. Elektrische Zahnbürste nach Anspruch 11, dadurch gekennzeichnet, daß der Stift (120) einends in einer Bohrung (128) der Welle (75) und anderenends in einer Bohrung (130) des Trägerrohrs (36) aufgenommen ist, wobei die Bohrungen (128, 130) zentrisch bezüglich einer Drehachse (122) der Welle (75) angeordnet sind.

13. Elektrische Zahnbürste nach Anspruch 11 oder 12, dadurch gekennzeichnet, daß eine am Fußabschnitt (134) angeordnete Rippe (126) des Trägers (101) von einer an der Welle (75) vorgesehenen Nut aufgenommen ist.

14. Elektrische Zahnbürste nach einem der Ansprüche 1 bis 13, dadurch gekennzeichnet, daß der Borstenträger (38) eine randseitige Ausnehmung in Form eines Kreissegmentes (132) aufweist.

15. Elektrische Zahnbürste nach einem der Ansprüche 1 bis 14, dadurch gekennzeichnet, daß der Träger (101) unmittelbar benachbart zum Borstenträger (38) angeordnet und/oder in diesen integriert ist.

16. Elektrische Zahnbürste nach einem der Ansprüche 1 bis 15, dadurch gekennzeichnet, daß die Borsten (109) der Interdentalbürste einen größeren Durchmesser und/oder eine höhere Steifigkeit als die Borsten (45) des Borstenträgers aufweisen.

## Claims

1. An electric toothbrush, with a brush section (24) in which a rotatably carried shaft (75) is received and on which a bristle supporting structure (38) coupled to the shaft (75) is rotatably mounted, and with means for driving the shaft (75) in an alternating motion, with a further brush section being provided which includes a mount (101) and is coupled to the shaft (75), **characterized in that** said further brush section is configured as an interproximal brush (100), with said mount (101) being connected to the shaft in a non-rotating relationship thereto, so that said mount (101), with the shaft (75) driven in an alternating motion, executes an alternating pivotal motion about the axis of rotation of the shaft (75) while at the same time the bristle supporting structure (38) performs an alternating rotary motion about an axis substantially normal to the shaft (75).

2. The electric toothbrush as claimed in claim 1, **characterized in that** the interproximal brush (100) is arranged at a distance to the bristle supporting structure (38).

3. The electric toothbrush as claimed in claim 1 or claim 2, **characterized in that** the interproximal brush (100) is arranged angularly, in particular at approximately right angles, with respect to the shaft (75).

4. The electric toothbrush as claimed in any one of the claims 1 to 3, **characterized in that** the interproximal brush (100) is arranged in the area of the brush section (24), and that an opening (108) is provided in the brush section (24) through which the interproximal brush (100) is passed.

5. The electric toothbrush as claimed in any one of the claims 1 to 4, **characterized in that** the interproximal brush (100) includes a mount (101) in which at least one, in particular two bristle clusters (102, 103) are held.

6. The electric toothbrush as claimed in any one of the claims 1 to 5, **characterized in that** the mount (101) is joined to the shaft (75) by adhesive bonding or by welding.

7. The electric toothbrush as claimed in claim 5 or claim 6, **characterized in that** the mount (101) is provided with one or several trunnions (104, 105), and the shaft (75) is provided with one or several associated bores (106, 107) for fitting the mount (101) therein.

8. The electric toothbrush as claimed in any one of the claims 1 to 7, **characterized in that** the bristles (45) of the bristle supporting structure (38) extend approximately in the same direction as the bristles (109) of the interproximal brush (100).

9. The electric toothbrush as claimed in any one of the claims 1 to 8, **characterized in that** the bristles (109) of the interproximal brush (100) are of greater length than the bristles (45) of the bristle supporting structure (38).

10. The electric toothbrush as claimed in any one of the claims 1 to 9, **characterized in that** the angle of rotation of the shaft (75) covers an angular range of ± 35 degrees, approximately.

11. The electric toothbrush as claimed in any one of the claims 1 to 10, **characterized in that** the mount (101) has a bore (124) in a base section (134) thereof and is located in position on the shaft (75) by means of a pin (120).

12. The electric toothbrush as claimed in claim 11, **characterized in that** the pin (120) has one end received in a bore (128) of the shaft (75) and its other end in a bore (130) of the mounting tube (36), with said bores (128, 130) being disposed concentrically with an axis of rotation (122) of the shaft (75).

13. The electric toothbrush as claimed in claim 11 or claim 12, **characterized in that** a rib structure (126) arranged at the base section (134) of the mount (101) is received in a groove provided on the shaft (75).

14. The electric toothbrush as claimed in any one of the claims 1 to 13, **characterized in that** the bristle supporting structure (38) has on its periphery a recess in the form of a circular segment (132).

15. The electric toothbrush as claimed in any one of the claims 1 to 14, **characterized in that** the mount (101) is disposed in the immediate vicinity of the bristle supporting structure (38) and/or integrally formed therewith.

16. The electric toothbrush as claimed in any one of the claims 1 to 15, **characterized in that** the bristles (109) of the interproximal brush have a larger diameter and/or a higher stiffness than the bristles (45) of the bristle supporting structure.

## Revendications

1. Brosse à dents électrique comportant une partie de brosse (24), dans laquelle un arbre (75) supporté de manière à pouvoir pivoter est logé et sur laquelle un support de poils (38), coupé à l'arbre (75), est supporté de manière à pouvoir tourner, et des moyens permettant un entraînement alternatif de l'arbre (75), une autre partie de brosse, qui présente un support (101) et est couplée à l'arbre (75), étant prévue, caractérisée en ce que l'autre partie de brosse est réalisée sous forme d'une brosse interdentaire (100), le support (101) étant relié à l'arbre de manière fixe en rotation de façon que le support (101) effectue, lorsque l'arbre (75) est entraîné suivant un mouvement alternatif, un mouvement de pivotement alternatif autour de l'axe de rotation de l'arbre (75), pour un mouvement de rotation alternatif simultané du support de poils (38) autour d'un axe sensiblement perpendiculaire à l'arbre (75).

2. Brosse à dents électrique suivant la revendication 1, caractérisée en ce que la brosse interdentaire (100) est agencée à distance du support de poils (38).

3. Brosse à dents électrique suivant l'une des revendications 1 et 2, caractérisée en ce que la brosse interdentaire (100) est agencée de manière angulaire par rapport à l'arbre (75), en particulier approximativement à angle droit.

4. Brosse à dents électrique suivant l'une des revendications 1 à 3, caractérisée en ce que la brosse interdentaire (100) est agencée dans la zone de la partie de brosse (24) et en ce que, dans la partie de brosse (24), est prévue une ouverture (108) à travers laquelle la brosse interdentaire (100) est passée.

5. Brosse à dents électrique suivant l'une des revendications 1 à 4, caractérisée en ce que la brosse interdentaire (100) présente un support (101) dans lequel au moins un, en particulier deux groupes de poils (102, 103), sont maintenus.

6. Brosse à dents électrique suivant les revendications 1 à 5, caractérisée en ce que le support (101) est collé ou soudé à l'arbre (75).

7. Brosse à dents électrique suivant l'une des revendications 5 et 6, caractérisée en ce que le support (101) est pourvu d'un ou de plusieurs tenons (104, 105) et en ce que l'arbre (75) est pourvu d'un ou de plusieurs trous adjoints (106, 107) pour l'enfichage du support (38).

8. Brosse à dents électrique suivant l'une des revendications 1 à 7, caractérisée en ce que les poils (45) du support de poils (38) sont orientés approximativement dans la même direction que les poils (109) de la brosse interdentaire (100).

9. Brosse à dents électrique suivant l'une des revendications 1 à 8, caractérisée en ce que les poils de la brosse interdentaire (100) sont plus longs que les poils (45) du support de poils (38).

10. Brosse à dents électrique suivant l'une des revendications 1 à 9, caractérisée en ce que la zone d'angle de rotation de l'arbre (75) est d'un ordre de grandeur d'environ +/-35 degrés.

11. Brosse à dents électrique suivant l'une des revendications 1 à 10, caractérisée en ce que le support (101) présente, dans une section de base (134), un alésage (124) et en ce qu'il est fixé sur l'arbre (75) au moyen d'une goupille (120).

12. Brosse à dents électrique suivant la revendication 11, caractérisée en ce que la goupille (120) est reçue, à une extrémité, dans un trou (128) de l'arbre (75) et, à l'autre extrémité, dans un trou (130) du tube de support (36), les trous (128, 130) étant agencés de manière centrée par rapport à un axe de rotation (122) de l'arbre (75).

13. Brosse à dents électrique suivant l'une des revendications 11 et 12, caractérisée en ce qu'une nervure (126) du support (101), qui est agencée sur la section de base (134), est reçue par une rainure prévue sur l'arbre (75).

14. Brosse à dents électrique suivant l'une des revendications 1 à 13, caractérisée en ce que le support de poils (38) présente un évidement marginal sous la forme d'un segment circulaire (132).

15. Brosse à dents électrique suivant l'une des revendications 1 à 14, caractérisée en ce que le support (101) est agencé directement à proximité du support de poils (38) et/ou est intégré dans celui-ci.

16. Brosse à dents électrique suivant l'une des revendications 1 à 15, caractérisée en ce que les poils (109) de la brosse interdentaire présentent un diamètre plus grand et/ou une rigidité plus élevée que les poils (45) du support de poils.
